# EUROPÄISCHE PATENTANMELDUNG

(11) **EP 0 961 415 A1**
(43) Veröffentlichungstag der Anmeldung: **01.12.1999**
(21) Anmeldenummer: 99810427.7
(22) Anmeldetag: 14.05.1999
(51) Int. Cl.: H04B 3/56

(54) **Vorrichtung und Verfahren zur Datenübertragung bzw. Signalauskopplung bei Stromleitern**

(30) Priorität: 25.05.1998 DE 19823234
(71) Anmelder: ABB RESEARCH LTD., 8050 Zürich (CH)
(72) Erfinder: Dzung, Dacfey, Dr., 5430 Wettingen (CH); Ramseier, Stefan, Dr., 5242 Birr (CH)
(74) Vertreter: Clerc, Natalia

(57) **Zusammenfassung**

Zur Auskopplung von Signalen aus einer Stromleitung (1a, 1b, 1c, 2) werden zwei unterschiedliche Auskoppler (3, 4) eingesetzt, von denen einer induktiv mit der Abschirmung (2) und der andere kapazitiv mit einer der Phasen (1b) verbunden ist. Die ausgekoppelten Signale (5, 6) werden in einer Auswahl- und Kombinationsschaltung (13) zu einem einzigen Ausgangssignal kombiniert. Hierzu wird die Qualität jedes der ausgekoppelten Signale ermittelt und sodann werden die Signale entsprechend ihrer Qualität gewichtet addiert. Dadurch wird ein Ausgangssignal erzeugt, welches eine höhere Signalqualität aufweist.

## Beschreibung

### Technisches Gebiet

Die Erfindung betrifft ein Verfahren und eine Vorrichtung zur Datenübertragung bzw. Signalauskopplung bei Stromleitern gemäss Oberbegriff der unabhängigen Ansprüche.

Derartige Verfahren und Vorrichtungen werden bei der Übertragung von Daten in Power Carrier (PLC) Systemen im Hoch-, Mittel und Niederspannungsbereich verwendet.

### Stand der Technik

In konventionellen System werden die Daten (z.B. Tondaten, Bilddaten, digitale Daten) bei PLC-Systemen mit einem Einkoppler in die Stromleitung eingekoppelt. Der Empfänger verfügt über einen Auskoppler, der die Signale wieder aus der Leitung auskoppelt und der weiteren Verarbeitung zuführt.

Da Stromleitungen in erster Linie für die Stromübertragung und nicht die Signalübertragung ausgelegt sind, sind die so empfangenen Signale oftmals stark gestört.

### Darstellung der Erfindung

Es stellt sich deshalb die Aufgabe, ein Verfahren bzw. eine Vorrichtung der eingangs genannten Art bereitzustellen, mit welchem bzw. welcher eine bessere Signalqualität erreicht wird.

Diese Aufgabe wird vom Gegenstand der unabhängigen Ansprüche gelöst.

Erfindungsgemäss werden also mehrere Auskoppler vorgesehen. Die so ausgekoppelten Signale werden verknüpft, um, verglichen mit den ausgekoppelten Signalen, ein fehlerreduziertes Ausgangssignal höherer Qualität zu erzeugen.

Zur Erzeugung des Ausgangssignals wird vorzugsweise die Signalqualität jedes ausgekoppelten Signals bestimmt. Hierzu können z.B. digitale Fehlerraten oder Rauschpegel (signal-to-noise ratio) der Signale ermittelt werden. Sodann werden die Signale z.B. mit entsprechender Gewichtung addiert, oder es wird nur das Signal mit der höchsten Qualität verwendet. Vorzugsweise wird dabei die Signalqualität wiederholt ermittelt, so dass eine adaptive Anpassung an sich ändernde Übertragungsparameter erreicht wird.

Die verschiedenen Auskoppler können z.B. räumlich voneinander getrennt an unterschiedlichen Orten entlang der Stromleitung angeordnet sein. Sie können auch mit verschiedenen Leitern der Stromleitung verbunden werden. Wird eine Stromleitung mit Abschirmung verwendet, so kann mindestens ein Auskoppler mit der Abschirmung und mindestens ein zweiter Auskoppler mit einer der Phasen verbunden werden. Eine Verbindung der Auskoppler mit verschiedenen Leitern bzw. der Abschirmung ist auch dann sinnvoll, wenn vom Sender das Signal in nur einen der Leiter bzw. nur in die Abschirmung eingekoppelt wird, da zwischen den Leitern und gegebenenfalls der Abschirmung eine starke Kopplung des Signals stattfindet.

### Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:
Fig. 1 ein Blockdiagramm einer Ausführung einer erfindungsgemässen Empfangsstation und
Fig. 2 einen möglichen Aufbau der Auswahl- bzw. Kombinationsschaltung von Fig. 1.

### Wege zur Ausführung der Erfindung

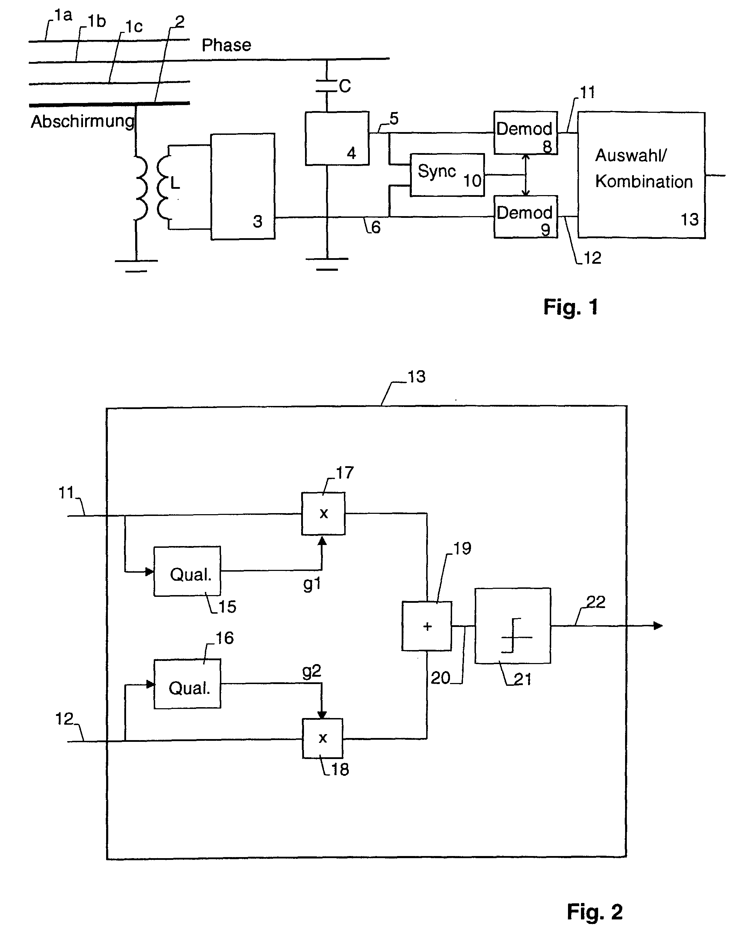

Fig. 1 zeigt ein Blockdiagramm einer bevorzugten Ausführung einer Empfängerschaltung für eine Mittelspannungsleitung mit drei Phasen 1a, 1b, 1c und einer Abschirmung 2. Die Mittelspannungsleitung trägt ein Signal, welches von einer (nicht gezeigten) Sendeschaltung z.B. in eine der Phasen 1a, 1b, 1c oder in die Abschirmung 2 eingekoppelt wurde. Aufgrund starker Signalkopplung pflanzt sich dieses Signal jedoch entlang allen Phasen la, 1b, lc und der Abschmirmung 2 fort. Die Empfängerschaltung besitzt zwei Auskoppler 3, 4, wobei im vorliegenden Beispiel einer an die Abschirmung und der andere an eine der Phasen angeschlossen ist. Der erste Auskoppler 3 ist über einen Trenntrafo L induktiv mit der Abschirmung 2 verbunden, der zweite Auskoppler 4 über einen Kondensator C kapazitiv mit der Phase 1b. Beide diese Auskoppler 3, 4 sind in bekannter Weise ausgeführt.

Je nach Zustand des Stromleiters 1a, 1b, 1c, 2 und je nach Störeinflüssen ist die Qualität der von den Auskopplern 3, 4 ausgekoppelten Signale 5 bzw. 6 unterschiedlich. Aufgabe der nachfolgenden Schaltung ist es deshalb, dynamisch und automatisch aus den ausgekoppelten Signalen 5, 6 ein Ausgangssignal möglichst guter Qualität zu erzeugen.

In der vorliegenden Ausführung werden hierzu die ausgekoppelten Signale 5, 6 zwei Demodulatoren 8, 9 zugeführt, welche über eine Synchronisationsschaltung 10 auf die Signale synchronisiert werden. Die Synchronisation kann für jeden Zweig unabhängig oder für beide gemeinsam durchgeführt werden. Für jedes Datensymbol der ausgekoppelten Signale erzeugen die Demodulatoren 8, 9 einen entsprechenden (analogen oder digitalen) Spannungswert. Die so aufbereiteten Signale 11, 12 werden einer Auswahl- bzw. Kombinationsschaltung 13 zugeführt.

Der Aufbau der Auswahl- bzw. Kombinationsschaltung 13 ist in Fig. 2 näher dargestellt. Sie umfasst für jedes Signal 11, 12 je eine Qualitäts-Abschätzschaltung 15 bzw. 16. Diese ermitteln mittels bekannter Verfahren das Signal- zu Rauschverhältnis als Qualitätsparameter. Entsprechend diesem Parameter werden die Signale 11, 12 in zwei Multiplizierschaltungen 17, 18 mit einem jeweiligen Gewichtswert gl bzw. g2 multipliziert und sodann einer Addierschaltung 19 zugeführt. Der Gewichtswert ist um so höher, je besser die Qualität des entsprechenden Signals 11 bzw. 12 ist, wobei die Summe der Gewichtswerte auf einen festen Wert normiert ist. Nach der Addierschaltung 19 liegt ein Ausgangssignal 20 vor, welches in der Regel eine höhere Qualität als die beiden ausgekoppelten Signale aufweist. Das Ausgangssignal 20 kann sodann einer konventionellen Dekodierschaltung 21 zur Erzeugung eines dekodierten Digitalsignals 22 zugeführt werden.

Das hier gezeigte Verfahren zur Erzeugung eines Ausgangssignals höherer Qualität aus mehreren Kanälen tieferer Qualität kann auf Techniken abstützen, die aus der Radioübermittlung bekannt sind, siehe z.B. J. G. Proakis, *Digital Commiunications,* McGraw-Hill, pp. 470 - 479. Die dort gezeigten Verfahren zur Kombination der Signale verschiedener Kanäle werden durch Bezug hier aufgenommen.

Das vorliegende Prinzip kann auch auf Empfänger ausgedehnt werden, die mehr als nur zwei Auskoppler benutzen. Je höher die Zahl der Auskoppler ist, desto besser wird in der Regel die Qualität des Ausgangssignals.

Die einzelnen Auskoppler können unterschiedlich aufgebaut sein. In der vorliegenden Ausführung ist einer der Auskoppler induktiv an die Stromleitung angebunden, der andere kapazitiv. Es ist auch denkbar, andere Auskopplungstechniken (z.B. basierend auf drahtlosen oder optischen Verfahren) einzusetzen. Da unterschiedliche Auskopplungstechniken in unterschiedlicher Art auf Störungen reagieren, kann durch Kombination mehrerer Techniken die Signalqualität stark verbessert werden.

Vorzugsweise werden die Auskoppler mit verschiedenen Punkten der Stromleitung verbunden, z.B. in gewissen Abständen voneinander. Auch dadurch wird erreicht, dass die Störungen der ausgekoppelten Signale weniger stark korreliert sind.

In der Ausführung gemäss Fig. 1 und 2 wird eine gewichtete Addition der teilweise aufbereiteten Signale verwendet, um ein Ausgangssignal höherer Qualität zu erzeugen. Es ist jedoch auch denkbar, dass aus den ausgekoppelten Signalen in anderer Weise ein Ausgangssignal erzeugt wird:
- In einer besonders einfachen Ausführung wird die Qualität der ausgekoppelten Signale 5, 6 oder der demodulierten Signale 11, 12 miteinander verglichen und sodann wird nur das Signal höchster Qualität weiterverarbeitet.
- In einer aufwendigeren Ausführung werden zuerst beide Signale demoduliert und dekodiert. Die Qualität jedes der so erzeugten Digitalsignale wird aufgrund eingebauter Redundanzen, Paritätsbits, etc. ermittelt, was wiederum eine gezielte Auswahl des besseren Signals zulässt.

## Patentansprüche

1. Verfahren zur Datenübertragung über eine Stromleitung im Hoch-, Mittel- oder Niederspannungsbereich, bei welchem ein Signal in die Stromleitung eingespiesen wird, dadurch gekennzeichnet, dass gleichzeitig mindestens zwei Auskoppler (3, 4) zur Auskopplung des Signals verwendet werden, und dass aus den von den Auskopplern (3, 4) ausgekoppelten Signalen ein fehlerreduziertes Ausgangssignal (20) erzeugt wird.

2. Verfahren nach Anspruch 1, dadurch gekennzeichnet, dass für jedes der ausgekoppelten Signale die Signalqualität bestimmt und bei der Erzeugung des Ausgangssignals berücksichtigt wird.

3. Verfahren nach Anspruch 2, dadurch gekennzeichnet, dass für jedes der ausgekoppelten Signale die Signalqualität wiederholt bestimmt wird, derart, dass Änderungen der Signalqualitäten bei der Erzeugung des Ausgangssignals (20) automatisch berücksichtigt werden.

4. Verfahren nach einem der Ansprüche 2 oder 3, dadurch gekennzeichnet, dass die ausgekoppelten Signale gewichtet mit ihrer Signalqualität miteinander verknüpft werden, insbesondere dass die Signale gewichtet zueinander addiert werden.

5. Verfahren nach einem der Ansprüche 1 - 3, dadurch gekennzeichnet, dass für jedes ausgekoppelte Signal Fehlerraten und/oder Rauschpegel ermittelt werden, und jeweils das ausgekoppelte Signal mit der kleinsten Fehlerrate bzw. mit dem kleinsten Rauschpegel verwendet wird.

6. Verfahren nach einem der vorangehenden Ansprüche, dadurch gekennzeichnet, dass die Stromleitung mehrere Leiter (1a, 1b, 1c) aufweist, wobei die Auskoppler (3, 4) Signale von unterschiedlichen Leitern auskoppeln, und/oder dass die Stromleitung mindestens einen Leiter (1a, 1b, 1c) und eine Abschirmung (2) aufweist, wobei mindestens ein Auskoppler (4) das Signal aus dem Leiter (1a, 1b, 1c) und mindestens ein Auskoppler (3) das Signal aus der Abschirmung (2) auskoppelt.

7. Verfahren nach einem der vorangehenden Ansprüche, dadurch gekennzeichnet, dass mindestens zwei Auskoppler das Signal an unterschiedlichen Orten entlang der Stromleitung (1a, 1b, 1c) auskoppeln.

8. Vorrichtung zum Auskoppeln eines Signals aus einer Stromleitung im Hoch-, Mittel- oder Niederspannungsbereich gekennzeichnet durch
mehrere Auskoppler (3, 4), wobei jeder Auskoppler (3, 4) ausgestaltet ist zur Auskopplung des Signals aus einem Leiter (la, 1b, lc) oder einer Abschirmung (2) der Stromleitung, und durch
Auswertemittel (13) zur Verarbeitung der von den Auskopplern (3, 4) ausgekoppelten Signale und zur Erzeugung eines fehlerreduzierten Ausgangssignals (20).

9. Vorrichtung nach Anspruch 8, dadurch gekennzeichnet, dass die Auswertemittel (13) ausgestaltet sind zur wiederholten, automatischen Bestimmung der Signalqualitäten der von den Auskopplern (3, 4) ausgekoppelten Signale und zur automatischen Berücksichtigung von Änderungen der Signalqualitäten bei der Erzeugung des Ausgangssignals (20) .

10. Vorrichtung nach einem der Ansprüche 8 oder 9, dadurch gekennzeichnet, dass mindestens einer (3) der Auskoppler, vorzugsweise induktiv, mit einer Abschirmung (2) des Stromleiters und mindestens ein anderer, vorzugsweise kapazitiv, mit einer Phase (1b) des Stromleiters verbunden ist.
